Europäisches Patentamt

European Patent Office

Office européen des brevets

(11) Publication number: **0 168 239**
**B1**

(12) **EUROPEAN PATENT SPECIFICATION**

(45) Date of publication of patent specification: **14.03.90**

(51) Int. Cl.⁵: **C 11 C 3/12, A 23 D 7/00**

(21) Application number: **85304889.0**

(22) Date of filing: **09.07.85**

(54) **Hydrogenation products.**

(30) Priority: **11.07.84 US 629967**
**19.10.84 GB 8426550**

(43) Date of publication of application:
**15.01.86 Bulletin 86/03**

(45) Publication of the grant of the patent:
**14.03.90 Bulletin 90/11**

(84) Designated Contracting States:
**AT BE CH DE FR GB IT LI NL SE**

(56) References cited:
**GB-A- 906 392**
**GB-A-1 208 629**
**GB-A-2 010 309**

The file contains technical information
submitted after the application was filed and
not included in this specification

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE**

(72) Inventor: **Van Dijk, Cornelis**
**Gerrit van der Veenstraat 56**
**NL-3333 BG Zwijndrecht (NL)**
Inventor: **Van Duijn, Gerrit**
**Adelaarsingel 1**
**NL-2623 JA Delft (NL)**
Inventor: **De Jongh, Rudolph Otto**
**Cornelie van Zantenstraat 216**
**NL-2551 PR The Hague (NL)**

(74) Representative: **Prins, Hendrik Willem et al**
**Octrooibureau Arnold & Siedsma**
**Sweelinckplein 1 Postbus 18558**
**NL-2502 EN The Hague (NL)**

Courier Press, Leamington Spa, England.

# EP 0 168 239 B1

**Description**

The present invention relates to products obtained by the hydrogenation of fish oil.

Hydrogenation of triglyceride oils is frequently carried out to alter the melting characteristics of the oil and/or to increase its stability. Hydrogenation reduces the number of double C=C bonds in the acyl chains and hence increases the melting point of the triglyceride and, additionally, leads usually to a reduction in its tendency to oxidise on storage which would lead to undesirable off-flavours. Hydrogenation of triglyceride oils is conventionally performed by reaction with molecular hydrogen in the presence of a catalyst.

Hydrogenation of fish oil can be particularly difficult due to a number of factors. Compared to for example some vegetable oils fish oil has a complicated fatty acid content and distribution. It can also have a relatively high initial iodine value. To reduce the amount of unsaturation to a useful level can thus need a high degree of hydrogenation. A further complication in the case of fish oil is that it can contain a relatively large amount of sulphur and other impurities which can effect the working of any catalyst chosen.

In the past fish oils have been hydrogenated to provide a product with a useful solid contents proifle. GB A 1120943 describes the hydrogenation of a number of fish oils and states that a relatively high degree of isomerisation (e.g. cis-trans isomerisation) is desired as it contributes to a desirable pattern in the melting behaviour of the resulting product.

Nowadays however, as mentioned in GB A 1589813, a reduced degree of trans product is desired. GB A 1589813 describes a method for treating a metallic catalyst with an externally applied electric potential with a view to effecting the selectivity of the hydrogenation reaction. Example XVI of GB A 1589813 relates to hydrogenation of fish oil. The Example given according to the process described in GB A 1589813 produces a fish oil having too low a solids content profile for many uses. The comparative example given in Example XVI of GB A 1589813 uses a conventional catalyst which from the description could be that described in GB A 1120943. Although use of the conventional nickel catalyst provides a useful solids content profile it does so accompanied by a relatively high degree of transformation.

According to the present invention there is provided hydrogenated fish oil having an iodine value of less than 80 and a trans fatty acid moiety content of less than 40% and either

(i) a slip melting point of from 34 to 36°C and a solid contents profile of $N_{20}$ 26 to 32.5%, $N_{30}$ 8 to 12% and $N_{35}<5\%$, or

(ii) a slip melting point of from 36 to 38°C and a solid contents profile of $N_{20}$ 49 to 56%, $N_{30}$ 21 to 26% and $N_{35}<15\%$.

Preferably oil (i) has a trans fatty acid moiety content of less than 35%, more preferably less than 32%. Preferably the trans fatty acid moiety content of oil (i) is more than 20, more preferably more than 22. Suitably the $N_{35}$ value of oil (i) is less than 3%. Suitably the iodine value of oil (i) is more than 60.

Preferably oil (ii) has a trans fatty acid moiety content of more than 20%, more preferably more than 25%. Preferably the iodine value of oil (ii) is less than 75, more preferably less than 70. Suitably oil (ii) has an iodine value of more than 55.

All percentages are by weight.

The present invention thus provides hydrogenated fish oils having melting points and solid contents profiles which allow the fish oil to be usefully employed in a wide range of edible products in combination with an iodine value of less than 80 and low trans values. We believe the combination to be new. The low iodine value and low trans value each reduce the tendency of the oil to oxidise and hence increase its stability in terms of for example taste keepability. The present invention can thus provide fish oils hydrogenated to a degree to render them useful in edible products having increased stability, in particular having reduced trans content.

An important use for the present invention can be in the preparation of margarines, halverines and the like. The present hydrogenated fish oils can be particularly useful for use as a hardstock in a print-type margarine.

It is to be understood that the present invention extends to a margarine oil blend incorporating the present fish oil and a margarine or the like containing such a margarine oil blend.

The present invention can be particularly useful when fish oils having initial high unsaturation such as Japanese, Chilean or Menhaden oil having iodine values higher than 150 are employed as the starting material. The present invention, is less applicable to, although it can be used for, oils such as Norwegian fish oil having an initial iodine value less than 150 e.g. 130 such as that obtained mainly from herrings. In either case the present hydrogenated fish oil is preferably prepared from an oil which has been neutralised and optionally subjected to other refining steps.

The present hydrogenated fish oil can be prepared by a variety of methods.

Suitably the fish oil is hydrogenated in the presence of a nickel catalyst. Catalysts that have been found useful for use in the present invention include finely dispersed nickel boride catalysts in the presence of an organic linear polymer employed either alone or in combination with a nickel catalyst on a solid carrier.

Nickel boride catalysts stabilised by an organic linear polymer, for example a polymer containing vinylpyrrolidone groups, can be prepared in a number of ways. One method is described in CA A 1128933 in which the catalyst is dispersed in an organic solvent such as an alcohol. Alternatively the colloidal nickel boride catalyst stabilised by an organic linear polymer can be dispersed in a fatty substance such as a triglyceride oil.

2

In the latter case the catalyst can be prepared by adding an alcoholic (e.g. methyl-, ethyl- or propylalcohol) solution of alkaliborohydride to an alcoholic solution of a nickel salt in an atomic ratio B:Ni of 1.5:1 to 3:1 of which at least one of the solutions contains the organic linear polymer dissolved in it. The addition takes place under an atmosphere of hydrogen or inert gas at a temperature between 0 and 80°C. The reaction results in the production of finely divided nickel boride. After the termination of the reaction a fatty substance e.g. a triglyceride oil such as soyabean oil is added to the system and the alcohol removed for example by vacuum distillation. Suitable nickel salts are salts sufficiently soluble in alcohol such as nickel chloride hexahydrate and nickel sulphate heptahydrate. Suitable organic linear polymers include vinylpyrrolidone containing polymers such as polyvinylpyrrolidone and polyvinylacetate/poly-vinylpyrrolidone copolymers. The average molecular weight of the stabilising polymer is preferably between 10,000 and 150,000. The amount of linear organic polymer in the oil suspension of the catalyst can be between 0.2 and 8%, preferably between 0.5 and 5% by weight, and the amount of nickel boride, calculated as nickel, can be from 0.1 to 5.0 wt%, preferably between 0.3 and 4.0 wt%.

A variation on the above catalyst preparation, which can provide a more active catalyst, employs the use of a nickel salt which contains less than 6 mol of water of crystallisation. For example a nickel chloride with four or less molecules of water of crystallisation such as nickel chloride dihydrate or nickel chloride tetrahydrate can be employed. The subsequent preparation of the finely divided nickel boride catalyst stabilised by an organic linear polymer can then be performed as described above.

Hydrogenation employing a finely divided nickel boride catalyst in the presence of an organic linear polymer suitably employs 10 to 1500 ppm Ni with respect to fish oil, a hydrogen pressure of 100 to 5000 kPa and a temperature of 20 to 180°C. On completion of the reaction the catalyst and polymer can be removed from the fish oil by washing with a dilute acid solution e.g. citric acid and optionally a post-treatment with bleaching earth and/or distillation.

The present fish oils can alternatively be prepared by the use of two or more sorts of catalyst. One particularly advantageous combination is the use of a nickel metal catalyst on a solid carrier such as Kieselguhr to effect an initial partial hydrogenation followed by, having removed the first catalyst, the use of one of the finely divided nickel boride catalysts described above. A suitable nickel metal catalyst is for example a commercial catalyst obtainable under the name Crosfield's Nicat NP/AC.60 (Nicat is a Registered Trade Mark). The advantage of such a combined procedure is that in for example a fish oil containing a high degree of sulphur and/or other impurities, their removal can be effected during the hydrogenation with the nickl metal catalyst.

Embodiments of the present invention will now be described by reference to the following Examples.

Refined and neutralised Japanese type fish oil having an IV of 179.41 and a fatty acid composition as follows was used in Examples 1 and 2: C14:0 8.6%, C16:0 18.7%, C16:1 10.5%, C18:0 3.3%, C18:1 13.0%, C18:2 1.5%, C18:3 1.1%, C18:4 1.2%, C20:0 1.1%, C20:1 1.7%, C20:2 0.4%, C20:3 1.1%, C20:4 0.5%, C20:5 14.0%, C22:0 1.0%, C22:1 0.2%, C22:2 1.0%, C22:3 0.3%, C22:4 3.2%, C22:5 9.6%, C24:0 0.9%.

In Examples 1 and 2 a finely dispersed nickel boride catalyst stabilised by polyvinylpyrrolidone was employed which ahd been prepared by the method described above. An ethanol solution (16 ml) containing 6.9 mmol $NaBH_4$ was added to an ethanol solution (34 ml) containing 2.5 mmol $NiCl_2 . 6H_2O$ and 240 mg polyvinylpyrrolidone with an average molecular weight of 90,000. The addition took place at room temperature and in a hydrogen atmosphere and resulted in the formation of nickel boride as a brown/black solution containing 0.3 wt% nickel boride calculated as nickel. 15 wt% soyabean oil was added to the nickel boride solution and the ethanol evaporated off under decreased pressure with stirring. The nickel boride dispersion in oil thus prepared contained 3 wt% of polymer and 2 wt% of nickel boride, calculated as nickel.

Example 1

Refined neutralised fish oil having the above fatty acid composition was hydrogenated using a nickel boride polyvinylpyrrolidone catalyst dispersed in soyabean triglyceride oil at a concentration of 2% wt Ni calculated as metal. The catalyst with respect to the nickel was used at a concentration with respect to the fish oil at a concentration of 0.02% Ni. The catalyst was dispersed in the fish oil and then subjected to molecular hydrogen at a pressure of 6 bar. The fish oil was maintained at a temperature of 110°C. The fish oil was subjected with stirring to hydrogen until by its refractive index (1.4525) it had attained the desired iodine value. The resulting oil was analysed for IV, trans content, slip melting point and solids content. The results are given in Table I below.

TABLE I

| | | |
|---|---|---|
| IV | | 79.2 |
| trans | (%) | 39 |
| $N_{10}$ | (%) | 49.7 |
| $N_{20}$ | (%) | 27.8 |
| $N_{30}$ | (%) | 10.5 |
| $N_{35}$ | (%) | 2.2 |
| Smp | (°C) | 34.5 |

## Example 2

Neutralised Menhaden fish oil having an iodine value of 157.3 and a trans content <1% was hydrogenated employing a nickel boride polyvinylpyrrolidone catalyst dispersed in soyabean oil at a concentration of 2% wt Ni calculated as metal. The catalyst with respect to Menhaden oil was used at a concentration of 0.02% Ni. The catalyst was dispersed in the fish oil which was maintained at 100°C and then subjected with stirring to molecular hydrogen at a pressure of 5 bar. Samples were withdrawn periodically from the oil and analysed for iodine value (IV), trans content, melting point and solid contents profile (N). The results are given in Table II below.

### TABLE II

| Hydrogenation Time (mins) | 132 | 243 |
|---|---|---|
| IV | 74.6 | 58.3 |
| Trans (%) | 34 | 31 |
| MP (°C) | 34 | 38 |
| $N_{20}$ (%) | 27.5 | 50.6 |
| $N_{25}$ (%) | 18.1 | 38.3 |
| $N_{30}$ (%) | 9.6 | 25.6 |
| $N_{35}$ (%) | 1.1 | 12.1 |
| $N_{40}$ (%) | 0.4 | 0.2 |

## Example 3

The present example employed a neutralised and dried fish oil having an iodine value of 179.

The catalyst employed was prepared from $NiCl_2 . 6H_2O$. The green hexahydrate was converted to golden-yellow dihydrate by heating it at 55°C for 30 minutes under vacuum conditions. Commercial absolute ethanol and 4 g polyvinylpyrrolidone (average molecular weight 40,000) were added to the dihydrate which was prepared from $NiCl_2 . 6H_2O$ originally present in an amount of 40 mmol. To the resulting suspension was added 160 ml of absolute ethanol solution containing 3.8 g $NaBH_4$ under a hydrogen atmosphere. A brownish-black colloidal solution of nickel boride was formed containing 1.2% nickel boride, calculated as nickel. 30% by weight soyabean oil was added to the nickel boride solution and the ethanol was evaporated under reduced pressure at approximately 20°C with stirring. The resulting nickel polyvinylpyrrolidone boride dispersion in oil was employed as the catalyst and had a 4 wt% content of Ni measured with respect to the soyabean oil.

The catalyst was added to the fish oil in an amount of 400 ppm Ni with respect to the fish oil. The oil/catalyst mixture was heated to 110°C and subjected to hydrogen at a pressure of 5 bar. Samples were withdrawn from the reaction vessel periodically for testing. A hardened fish oil having the specification given in Table III below was obtained.

### TABLE III

| IV | 79.8 |
|---|---|
| Trans (%) | 30 |
| MP (°C) | 35.5 |
| $N_{10}$ (%) | 47.1 |
| $N_{20}$ (%) | 27.2 |
| $N_{30}$ (%) | 10.1 |
| $N_{35}$ (%) | 3.6 |

## Example 4

In this example the same fish oil having an initial iodine value of 179 was employed as in Example 3.

In the present example however the fish oil was first hydrogenated at 150°C under a hydrogen pressure of 5 bar employing a commercially available nickel catalyst on carrier, known as a Nicat NP/AC.60 (Nicat is a Registered Trade Mark) at a concentration of 1000 ppm Ni with respect to oil until an iodine value of 129 was reached. The catalyst was then removed by filtering and the fish oil was subjected to further hydrogenation employing a nickel polyvinylpyrrolidone boride catalyst in soyabean oil prepared according to the procedure described in Example 3 at a concentration of 155 ppm Ni with respect to the fish oil. The latter hydrogenation took place at a temperature of 110°C under a hydrogen pressure of 5 bar. The hydrogenation was continued until a fish oil having the specification given in Table IV below was obtained.

TABLE IV

| IV | 79.4 |
|---|---|
| Trans (%) | 24 |
| MP (°C) | 35 |
| $N_{10}$ (%) | 45.1 |
| $N_{20}$ (%) | 26.1 |
| $N_{30}$ (%) | 10.1 |
| $N_{35}$ (%) | 3.6 |

Examples 5 and 6

Neutralised and dried fish oil having an initial iodine value of 176.1 was hydrogenated at a temperature of 110°C and a hydrogen pressure of 6 bar using as catalyst at a concentration of 400 ppm Ni with respect to the fish oil a catalyst prepared according to the procedure described in Example 3.

The results of the hydrogenation are given in Table V below.

TABLE V

| Example | 5 | 6 |
|---|---|---|
| IV | 74.1 | 61.6 |
| Trans (%) | 38 | 35 |
| MP (°C) | 35 | 37 |
| $N_{10}$ (%) | 54.0 | 70.8 |
| $N_{20}$ (%) | 31.8 | 50.9 |
| $N_{30}$ (%) | 11.7 | 25.7 |
| $N_{35}$ (%) | 3.5 | 13.3 |

Comparative Examples A and B

As a comparison to Examples 5 and 6 fish oil from the same batch as that employed in Examples 5 and 6 was hydrogenated using as catalyst Nicat NP/AC 60 at a concentration of 1000 ppm Ni with respect to the fish oil. The hydrogenation took place at a temperature of 150/180°C and a pressure of 3 bar and followed the two-stage procedure described in GB—A—1120943.

The results are given in Table VI below.

TABLE VI

| Example | A | B |
|---|---|---|
| IV | 76.8 | 62.9 |
| Trans (%) | 49 | 43 |
| MP (°C) | 35 | 37 |
| $N_{10}$ (%) | 54.4 | 75.0 |
| $N_{20}$ (%) | 30.7 | 54.7 |
| $N_{30}$ (%) | 9.1 | 28.2 |
| $N_{35}$ (%) | 2.1 | 14.6 |

**Claims**

1. Hydrogenated fish oil having an iodine value of less than 80 and a trans fatty acid moiety content of less than 40% and either
(i) a slip melting point of from 34 to 36°C and a solid contents profile of $N_{20}$ 26 to 32.5%, $N_{30}$ 8 to 12% and $N_{35}<5\%$, or
(ii) a slip melting point of from 36 to 38°C and a solid contents profile of $N_{20}$ 49 to 56%, $N_{30}$ 21 to 26% and $N_{35}<15\%$.

2. Hydrogenated fish oil according to Claim 1 wherein oil (i) has a trans fatty acid moiety content of less than 35%, preferably less than 32%.

3. Hydrogenated fish oil according to Claim 1 or Claim 2 wherein oil (i) has a trans fatty acid moiety content of more than 20, preferably more than 22.

4. Hydrogenated fish oil according to any one of the preceding claims wherein oil (i) has a $N_{35}$ value of <3%.

5. Hydrogenated fish oil according to Claim 1 wherein oil (ii) has a trans fatty acid moiety content of more than 20%, preferably more than 25%.

6. Hydrogenated fish oil according to Claim 1 or Claim 5 wherein oil (ii) has an iodine value of less than 75, preferably less than 70.

7. Hydrogenated fish oil according to any one of Claims 1, 5 and 6 wherein oil (ii) has an iodine value of more than 55.

8. Margarine oil blend incorporating a hydrogenated fish oil according to any one of the preceding claims.

9. Margarine containing an oil blend according to Claim 8.


**Patentansprüche**

1. Hydriertes Fischöl mit einer Jodzahl von weniger als 80 und einem trans-Fettsäureteil-Gehalt von weniger als 40% und entweder

(i) einem Steigschmelzpunkt von 34 bis 36°C und einem Feststoffgehalt-Profil von $N_{20}$ 26 bis 32,5%, $N_{30}$ 8 bis 12% und $N_{35}$ <5%, oder

(ii) einem Steigschmelzpunkt von 36 bis 38°C und einem Feststoffgehalt-Profil von $N_{20}$ 49 bis 56%, $N_{30}$ 21 bis 26% und $N_{35}$ <15%.

2. Hydriertes Fischöl nach Anspruch 1, worin Öl (i) einen trans-Fettsäureteil-Gehalt von weniger als 35%, vorzugsweise weniger als 32%, hat.

3. Hydriertes Fischöl nach Anspruch 1 oder 2, worin Öl (i) einen trans-Fettsäureteil-Gehalt von mehr als 20%, vorzugsweise mehr als 22%, hat.

4. Hydriertes Fischöl nach irgendeinem der vorhergehenden Ansprüche, worin Öl (i) einen $N_{35}$-Wert von <3% hat.

5. Hydriertes Fischöl nach Anspruch 1, worin Öl (ii) einen trans-Fettsäureteil-Gehalt von mehr als 20%, vorzugweise mehr als 25%, hat.

6. Hydriertes Fischöl nach Anspruch 1 oder 5, worin Öl (ii) eine Jodzahl von weniger als 75, vorzugsweise weniger als 70, hat.

7. Hydriertes Fischöl nach irgendeinem der Ansprüche 1, 5 und 6, worin Öl (ii) eine Jodzahl von mehr als 55 hat.

8. Margarineölmischung, mit einem einverleibten hydrierten Fischöl gemäß irgendeinem der vorhergehenden Ansprüche.

9. Margarine, enthaltend eine Ölmischung gemäß Anspruch 8.


**Revendications**

1. Huile de poisson hydrogénée ayant un indice d'iode inférieur à 80 et une teneur en fractions acides gras trans inférieure à 40% et soit

(i) un point de fusion avec glissement allant de 34 à 36°C et un profil de teneur en solides de $N_{20}$ 26 à 32,5%; $N_{30}$ 8 à 12%; et $N_{35}$ inférieur à 5%, soit

(ii) un point de fusion avec glissement allant de 36 à 38°C et un profil de teneur en solides de $N_{20}$ 49 à 56%, $N_{30}$ 21 à 26% et $N_{35}$ inférieur à 15%.

2. Huile de poisson hydrogénée selon la revendication 1, dans laquelle l'huile (i) a une teneur en fractions acides gras trans inférieure à 35%, de préférence inférieure à 32%.

3. Huile de poisson hydrogénée selon la revendication 1 ou la revendication 2, dans laquelle l'huile (i) a une teneur en fractions acides gras supérieure à 20, de préférence, supérieure à 22.

4. Huile de poisson hydrogénée selon l'une quelconque des revendications précédentes, dans laquelle l'huile (i) a une valeur de $N_{35}$ inférieure à 3%.

5. Huile de poisson hydrogénée selon la revendication 1, dans laquelle l'huile (ii) a une teneur en fractions acides gras trans supérieure à 20%, de préférence supérieure à 25%.

6. Huile de poisson hydrogénée selon la revendication 1 ou la revendication 5, dans laquelle l'huile (ii) a un indice d'iode inférieur à 75, de préférence inférieur à 70.

7. Huile de poisson hydrogénée selon l'une quelconque des revendications 1, 5 et 6, dans laquelle l'huile (ii) a un indice d'iode supérieur à 55.

8. Mélange d'huile de margarine incorporant une huile de poisson hydrogénée selon l'une quelconque des revendications précédentes.

9. Margarine contentant un mélange d'huile selon la revendication 8.